# EUROPÄISCHE PATENTANMELDUNG

(11) **EP 1 243 396 A1**
(43) Veröffentlichungstag der Anmeldung: **25.09.2002**
(21) Anmeldenummer: 02006241.0
(22) Anmeldetag: 20.03.2002
(51) Int. Cl.: B29C 45/17

(54) **Verfahren zur Herstellung von Kunststoffformteilen mit einem Hohlraum nach dem Spritzgiessverfahren**

(30) Priorität: 23.03.2001 DE 10114415
(71) Anmelder: Battenfeld GmbH, D-58540 Meinerzhagen (DE)
(72) Erfinder: Eckardt, Helmut, Dipl.-Ing., 58540 Meinerzhagen (DE); Schwesinger, Rolf, 58540 Meinerzhagen (DE); Van der Steen, Stephan, Dipl.-Ing., 57489 Drolshagen-Schürholz (DE); Wülfrath, Marc, Dipl.-Ing., 58566 Kierspe (DE)

(57) **Zusammenfassung**

Die Erfindung betrifft ein Verfahren zum Spritzgießen von mindestens einen Hohlraum aufweisenden Formteilen aus thermoplastischem Kunststoffmaterial, das die Schritte aufweist: a) Einspritzen von thermoplastischer Kunststoffschmelze von einer Einspritzeinheit entlang eines Schmelzefließweges in die Kavität eines Spritzgießwerkzeugs; b) Einspritzen eines Fluids in das noch schmelzflüssige Kunststoffmaterial, so daß dieses an die Wandungen der Kavität gepreßt wird; c) Abkühlenlassen des Kunststoffmaterials, bis dieses selbsttragend das Formteil bildet; d) Entformen des Formteils aus der Kavität des Spritzgießwerkzeugs.

Erfindungsgemäß ist vorgesehen, daß die Füllung der Kavität (5) mit Kunststoffschmelze gemäß Schritt a) so erfolgt, daß die Kavität (5) vollständig volumetrisch mit Kunststoffschmelze gefüllt wird, und daß als Fluid, das gemäß Schritt b) in das noch schmelzflüssige Kunststoffmaterial eingespritzt wird, eine Flüssigkeit eingesetzt wird, wobei während oder nach Schritt b) und vor Schritt c) des weiteren Druckgas in den durch die Flüssigkeit gebildeten Hohlraum (1) eingebracht wird.

## Beschreibung

Die Erfindung betrifft ein Verfahren zum Spritzgießen von mindestens einen Hohlraum aufweisenden Formteilen aus thermoplastischem Kunststoffmaterial, das die Schritte aufweist:
a) Einspritzen von thermoplastischer Kunststoffschmelze von einer Einspritzeinheit entlang eines Schmelzefließweges in die Kavität eines Spritzgießwerkzeugs;
b) Einspritzen eines Fluids in das noch schmelzflüssige Kunststoffmaterial, so daß dieses an die Wandungen der Kavität gepreßt wird;
c) Abkühlenlassen des Kunststoffmaterials, bis dieses selbsttragend das Formteil bildet;
d) Entformen des Formteils aus der Kavität des Spritzgießwerkzeugs.

Als thermoplastisches Kunststoffmaterial ist hier jede Gruppe der Thermoplaste vorgesehen, egal ob diese mit Zusatzstoffen wie Glasfasern, chemischen oder physikalischen Treibmitteln oder ähnlichen versehen sind.

Das gattungsgemäße Verfahren ist als Gas-Innendruck-Verfahren bei der Fertigung von Formteilen aus thermoplastischem Kunststoff bekannt und weit verbreitet. Ein solches Verfahren ist beispielsweise aus der **US 4,101 617** bekannt. Dabei wird in die noch schmelzflüssige Kunststoffschmelze ein Fluid unter Druck eingebracht. Durch den so im Inneren der Schmelze erzeugten Druck wird die Schmelze gegen die Kavitätswand des Spritzgießwerkzeugs gepreßt; Einfallstellen infolge Volumenkontraktion beim Abkühlen werden so vermieden.

Als Fluid, das unter Druck in die Schmelze injiziert wird, wird üblicherweise Stickstoffgas verwendet. Es hat den Vorteil, daß es als inertes Gas keiner chemischen Reaktion in der heißen Schmelze unterliegt. Dabei wird der Nachteil in Kauf genommen, daß der Stickstoff meist recht teuer in der Herstellung ist. Entweder muß die Spritzgießvorrichtung mit Stickstoff aus Flaschen oder mit Flüssigstickstoff versorgt werden oder das Gas wird vor Ort - bei größerem Gasbedarf ― beispielsweise mittels Molekularfilter gewonnen.

Die immer weiter steigenden Anforderungen an die Wirtschaftlichkeit des Prozesses bedingen immer kürzere Spritzgießzyklen bei möglichst steigender Qualität der zu fertigenden Formteile. Um die kürzeren Zyklen zu erreichen, sind verschiedene Ansätze gemacht worden:

Die **EP-0 400 308 B1** schlägt vor, nach der Gasinjektion in die Schmelze das Gas an einer von der Einspritzstelle entfernten Stelle wieder austreten zu lassen; anschließend wird eine Zirkulation des Gases durch den geschaffenen Hohlraum bewerkstelligt. In den Gaskreislauf ist ein Kühler integriert. Damit soll ein schnellerer Abkühlungsprozeß der Schmelze erfolgen, da gekühltes Gas im geschlossenen Kreislauf zugeführt wird.

Die **DE-42 19 915 A1** stellt indes darauf ab, gekühltes Gas einzusetzen, das in die Schmelze eingespritzt wird. Dabei ist namentlich vorgesehen, daß das Gas auf Temperaturen bis zu - 160 °C abgekühlt wird. Auf diese Weise soll das Kunststoffmaterial so schnell wie möglich abkühlen; die Zeitspanne vom Einspritzen der Schmelze ins Spritzgießwerkzeug bis zur Entformung wird damit reduziert.

Bei den vorbekannten Verfahren ist es nachteilhaft, daß zum einen nach wie vor teurer Stickstoff erforderlich ist und zum anderen trotz aller Maßnahmen aufgrund der beschränkten Wärmekapazität des Gases der Abkühlungseffekt begrenzt bleibt. Unabhängig davon kommt es aufgrund des starken Viskositätsunterschiedes zwischen Schmelze und Gas zu dem Problem, daß mitunter Fließmarkierungen an der Formteiloberfläche auftreten, die die Qualität des zu fertigenden Formteils negativ beeinflussen.

Der Erfindung liegt daher die **Aufgabe** zugrunde, das Spritzgießverfahren der gattungsgemäßen Art so weiterzuentwickeln, daß die genannten Nachteile vermieden werden. Das Verfahren soll es also möglich machen, ohne den Einsatz von teurem Stickstoff auszukommen. Des weiteren soll eine möglichst kurze Kühlzeit realisierbar sein, die den Spritzgießprozeß nennenswert verkürzt. Schließlich soll das Verfahren auch sicherstellen, daß ein möglichst homogener Fließverlauf der Schmelze in das Spritzgießwerkzeug erfolgt, so daß Umschaltmarkierungen möglichst vermieden werden können.

Diese Aufgabe wird in Verbindung mit dem Oberbegriff des Anspruchs 1 **dadurch gelöst,** daß
die Füllung der Kavität mit Kunststoffschmelze gemäß obigem Schritt a) so erfolgt, daß die Kavität vollständig volumetrisch mit Kunststoffschmelze gefüllt wird, und
daß als Fluid, das gemäß obigem Schritt b) in das noch schmelzflüssige Kunststoffmaterial eingespritzt wird, eine Flüssigkeit mit hoher Wärmekapazität eingesetzt wird,
wobei während oder nach Schritt b) und vor Schritt c) des weiteren Druckgas in den durch die Flüssigkeit gebildeten Hohlraum eingebracht wird.

Der Kerngedanke der Erfindung stellt also darauf ab, daß als in die Schmelze zu injizierende Fluid eine Flüssigkeit mit hoher Wärmekapazität eingesetzt wird, wobei hierdurch erreicht wird, daß ein schneller Abkühlprozeß stattfindet, so daß die Zykluszeit des Spritzgießzyklus nennenswert reduziert werden kann. Die zusätzliche Eingabe eines Druckgases, hier kann beispielsweise Luft, Stickstoff (N₂) oder Kohlendioxid (CO₂) eingesetzt werden, unterstützt den Formteilbildungsprozeß. Mit dem Gas kann ein hoher Druck gehalten werden, bis das Formteil selbsttragend ist. Weiterhin ist es möglich, die Flüssigkeit so einzubringen, daß weitgehendst ein Kanal für das Gas geschaffen wird und dieses dann die eigentliche Formteilbildung sicherstellt. D.h. demzufolge, daß im ersten Schritt Flüssigkeit eingegeben wird, um einen Hohlraum vorzuformen, anschließend Gas eingebracht wird, um die Flüssigkeit zumindestens teilweise zu entfernen und anschließend das Gas unter Druck gehalten wird, um das Formteil zu bilden.

Bei dieser Vorgehensweise hat es sich überraschend gezeigt, daß durch die genannten Merkmale kaum Fließmarkierungen auftreten, die ansonsten beim Gasinnendruckverfahren zu befürchten und zu beobachten sind. Dies wird auf die vergleichbare Viskosität der flüssigen Schmelze mit der eingespritzten Flüssigkeit hoher Wärmekapazität zurückgeführt.

Gemäß einer ersten Weiterbildung ist vorgesehen, daß während des obigen Verfahrensschrittes b) ein Teil des noch schmelzflüssigen Kunststoffmaterials aus der Kavität in eine entformbare Nebenkavität verdrängt wird. Der Fluß von Kunststoffmaterial von der Kavität in die Nebenkavität wird dabei bevorzugt durch Ventilmittel gesteuert, die gemäß zeitlicher Vorgabe geöffnet bzw. geschlossen werden. Damit ist eine gezielte Beeinflussung des Überfließens der Schmelze von der Haupt- zu der Nebenkavität möglich. Weiterhin ist es denkbar, mehrere Nebenkavitäten, die unabhängig von einander gesteuert werden, einzusetzen.

Die Flüssigkeit kann entlang des Schmelzefließweges durch den Angußbereich direkt oder über die Maschinendüse, über die die Kunststoffschmelze zugeführt wird, in die Kavität eingespritzt werden oder alternativ dazu direkt mittels einer Einspritzdüse in die Kavität, wobei bei dem Erfordernis, mehrere Hohlräume zu bilden, für jeden Hohlraum eine separate Einspritzdüse vorgesehen ist.

Im zweiten Falle kann es vorteilhaft sein, wenn ein Teil des sich in der Kavität befindlichen Kunststoffmaterials während des obigen Schrittes b) durch die eingespritzte Flüssigkeit in Richtung auf die Einspritzeinheit zu aus der Kavität wieder heraus zurückgetrieben wird.

Eine weitere Verbesserung des Fließverhaltens der Schmelze bzw. der Steuerung dieses Verhaltens ergibt sich, wenn vor dem Einspritzen der thermoplastischen Kunststoffschmelze in der Kavität ein gegenüber dem Umgebungsdruck erhöhter Druck durch Einbringen eines Gases aufgebaut wird. Dieser Gasdruck kann während des obigen Schrittes a) in Abhängigkeit davon gesteuert und/oder geregelt werden, wie der Einspritzdruck der Schmelze während deren Einspritzung zunimmt. Vorzugsweise wird der Gasdruck nach einem vorbestimmten Druck- oder Zeitprofil gefahren.

Als eine besonders vorteilhafte Ausgestaltung hat es sich erwiesen, daß die Flüssigkeit vor dem Einspritzen in das noch schmelzflüssige Kunststoffmaterial temperiert wird. Hier ist namentlich daran gedacht, daß die Flüssigkeit auf einen vorgegebenen Temperaturbereich gekühlt wird. Als besonders vorteilhaft wird dabei ein Temperaturbereich zwischen -20°C und +20°C, vorzugsweise zwischen 4°C und 15°C, vorgesehen. Es kann aber auch erforderlich sein, beispielsweise bei Materialien, die durch eine schockartige Abkühlung geschädigt werden, die Flüssigkeit auf einen vorgegebenen Temperaturbereich zu erwärmen. Als besonders vorteilhaft wird dabei ein Temperaturbereich zwischen 20°C und 150°C, vorzugsweise zwischen 40°C und 100°C, vorgesehen. Bei den oben angegebenen Temperaturbereichen wurde in erster Linie an den Einsatz von Wasser gedacht. Es ist aber auch denkbar, zum Beispiel verflüssigte Gase wie Kohlendioxid oder Stickstoff einzusetzen, um den Kühleffekt besonders zu verstärken. Beim Einsatz derartiger Flüssigkeiten bietet sich ein Temperaturbereich zwischen -150°C und -20°C an, wobei der Bereich von -60°C bis -40°C bevorzugt wird. Da die Flüssigkeit unter erhöhtem Druck in die Schmelze eingegeben wird, wird erreicht, daß die Siedetemperatur erhöht wird und somit das Fluid flüssig eingegeben werden kann.

Bei dem erfindungsgemäßen Konzept kommt der Entfernung der eingespritzten Flüssigkeit - möglichst noch in der Spritzgießvorrichtung - eine besondere Bedeutung zu. Es bestehen hier erfindungsgemäß mehrere Möglichkeiten.

Zunächst kann vorgesehen werden, daß nach dem Abkühlenlassen und vor der Entformung folgender Verfahrensschritt ausgeführt wird:
c') Einpressen von Druckgas, vorzugsweise Druckluft, entlang des Weges, über den die Flüssigkeit in das Kunststoffmaterial eingespritzt wurde, und Ausblasen der Flüssigkeit aus dem Hohlraum des Formteils an mindestens einer Ausblasstelle, die sich an einer Stelle befindet, die von der Eingabestelle der Flüssigkeit entfernt ist.

Die Ausblasstelle wird bevorzugt im Bereich des Fließwegendes des Kunststoffmaterials angeordnet. Um einen weiter erhöhten Kühleffekt zu erzielen, kann gemäß Schritt c') anstelle von Druckgas erneut Flüssigkeit eingegeben werden und somit ein Zirkulieren der Flüssigkeit durch das Formteil erreicht werden.

Alternativ dazu kann vorgesehen werden, daß zu dem genannten Zeitpunkt folgender Verfahrensschritt ausgeführt wird:
c") Einpressen von Druckgas, vorzugsweise Druckluft, an einer Gaseingabestelle, die von der Stelle entfernt ist, an der die Flüssigkeit in das Kunststoffmaterial eingespritzt wurde, und Ausblasen der Flüssigkeit aus dem Hohlraum des Formteils über die Stelle, an der die Flüssigkeit in das Kunststoffmaterial eingespritzt wurde.

Hierbei kann vorgesehen werden, Mittel einzusetzen, die über eine geeignete Umschaltvorrichtung die Flüssigkeit und/oder das Druckgas über den gleichen Medienweg eingeben und wieder ablassen.

Neben dem Ausblasen der Flüssigkeit aus dem Hohlraum kommt auch ein Absaugen der Flüssigkeit in Frage. Dann ist vorgesehen, daß folgender Verfahrensschritt ausgeführt wird:
c''') Anlegen eines Vakuums an einer fluidisch mit dem flüssigkeitsgefüllten Hohlraum in Verbindung stehenden Stelle, um die sich im Hohlraum befindliche Flüssigkeit aus dem Hohlraum abzusaugen.

Dabei wird vorteilhafter Weise das Vakuum an die Einspritzdüse für Flüssigkeit angelegt. Um sicherzustellen, daß durch das Vakuum das Formteil nicht in sich zusammengezogen wird, kann vor oder während dem Anlegen des Vakuums eine Belüftungsöffnung geschaffen werden.

Der Formbildungsprozeß während des Einspritzens von Schmelze und von Flüssigkeit sowie während des Aushärtens des Materials kann durch entsprechende Steuerung bzw. Regelung der Mediendrücke günstig beeinflußt werden. Es ist daher vorteilhafterweise vorgesehen, daß auf die in die Kunststoffschmelze eingebrachte Flüssigkeit während der obigen Schritte b) und/oder c) ein Druck ausgeübt wird, der gemäß einem vorgegebenen Zeitprofil geregelt oder gesteuert wird. Das Druckprofil kann dabei gemäß einem pulsierend an- und absteigenden Verlauf geregelt oder gesteuert werden; dabei ist vor allem an einen sinusförmig um einen vorgegebenen konstanten Druckwert verlaufenden Druckverlauf gedacht. Alternativ kann auch vorgesehen werden, daß der Druck in einer ersten Zeitphase auf einem ersten, vorzugsweise konstanten, Niveau und in einer späteren, zweiten Zeitphase auf einem zweiten, vorzugsweise konstanten, Niveau geregelt oder gesteuert wird, wobei das erste Druckniveau niedriger als das zweite ist. Hierbei kann sich der Druck sowohl auf die eingegebene Flüssigkeit als auch auf das zusätzlich eingegebene Druckgas auswirken, da das Druckgas auch während der Eingabe der Flüssigkeit eingegeben werden kann.

Als eine weitere vorteilhafte Weiterbildung kann das Spritzgießwerkzeug so ausgebildet werden, daß die Kavität bzw. das Volumen der das Formteil bildenden Kavität vor, während oder nach dem Schritt b), also der Eingabe des Fluids in das noch schmelzflüssige Kunststoffmaterial, vergrößert wird. Diese Ausgestaltung eines Spritzgießwerkzeuges wird allgemein als atmendes Werkzeug bezeichnet.

Nach dem die Flüssigkeit aus dem Hohlraum entfernt wurde, können die Öffnung(en) zum Hohlraum durch Nachspritzen von Schmelze versiegelt werden.

Als Flüssigkeit mit hoher Wärmekapazität kommt bevorzugt Wasser, Öl oder Alkohol in Frage. Es ist aber auch denkbar, flüssiges Kohlendioxid oder flüssigen Stickstoff einzusetzen.

In der Zeichnung ist ein Ausführungsbeispiel der Erfindung dargestellt. Die Figuren zeigen:
- Fig. 1: den schematischen Schnitt durch eine Spritzgießvorrichtung;
- Fig. 2: den schematischen Schnitt durch ein Spritzgießwerkzeug mit Nebenkavität;
- Fig. 3: denselben Schnitt wie in Fig. 2, jedoch ohne Nebenkavität;
- Fig. 4: einen Ausschnitt durch den Einspritzbereich für Schmelze und Flüssigkeit.

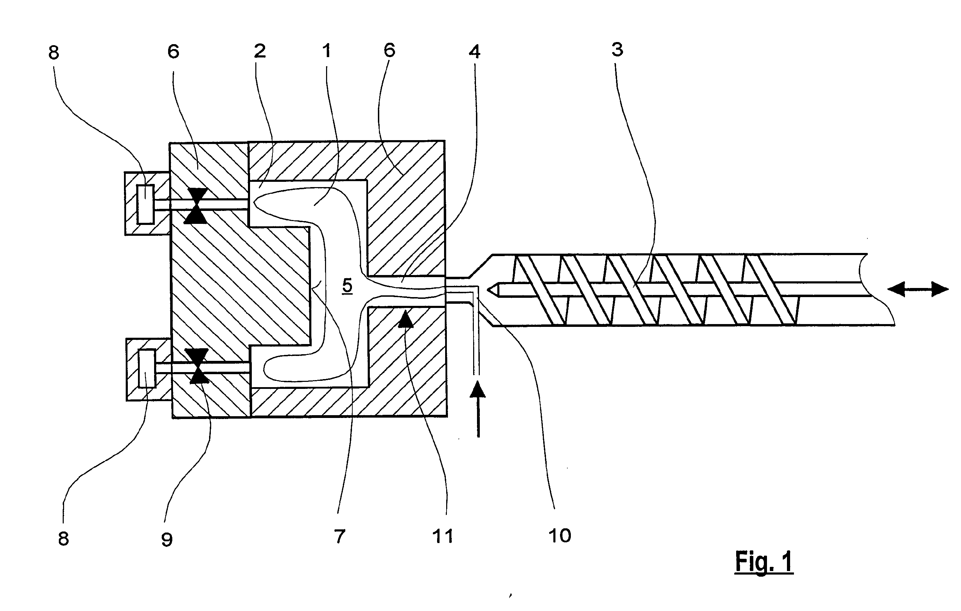

In Fig. 1 ist eine Spritzgießvorrichtung zu sehen, die eine Einspritzeinheit 3 aufweist, die in üblicher Weise Kunststoffschmelze erzeugt und in ein Spritzgießwerkzeug 6 einspritzt. Das Werkzeug 6 hat eine Kavität 5 mit einer Kavitätswand 7. Die Kunststoffschmelze wird dabei entlang eines Schmelzefließweges 4 durch eine Maschinendüse von der Einspritzeinheit 3 in das Werkzeug 6 gespritzt.

Das herzustellende Formteil 2 hat dabei einen Hohlraum 1, der zum einen das Teil leichter macht und weniger Materialeinsatz fordert, der es zum anderen ermöglicht, daß während des Abkühlens der Schmelze in der Kavität 5 diese gegen die Kavitätswand 7 gepreßt wird. Die produzierten Formteile 2 haben daher eine besonders gute Oberflächenqualität.

Es kann vorgesehen werden, daß während des Einspitzens der Schmelze in die Kavität 5 und/oder während der Eingabe des Fluids ein Teil der Schmelze in eine Überlaufkavität 8 überströmt. Das Überströmen kann durch Ventilmittel 9 gesteuert bzw. geregelt werden.

Das Einspritzen des Fluids erfolgt vorwiegend über die Einspritzdüse 10. Wie zu sehen ist, breitet sich das Fluid daher entlang des Schmelzefließweges 4 in Richtung der Kavität 5 aus.

Als Fluid kommt erfindungsgemäß eine Flüssigkeit mit hoher Wärmekapazität zum Einsatz. Das führt zu einer sehr kurzen Zykluszeit, da die Flüssigkeit viel Wärme von der Kunststoffschmelze aufnehmen kann.

Diese erstarrt daher in kurzer Zeit, weshalb der Entformungsprozeß - verglichen mit bekannten Verfahren - früher starten kann.

Die Kavität 5 wird vor dem Einspritzen der Flüssigkeit vollständig gefüllt. Dann wird die Flüssigkeit, vorzugsweise Wasser, eingespritzt. Durch eine Temperierung der Flüssigkeit, namentlich durch eine Kühlung auf einen Wert zwischen 4 °C und 15 °C, kann erreicht werden, daß eine sehr schnelle Aushärtung der Kunststoffschmelze erfolgt, wobei es ausreicht, das Kunststoffmaterial derart zu kühlen, daß es selbsttragend ist.

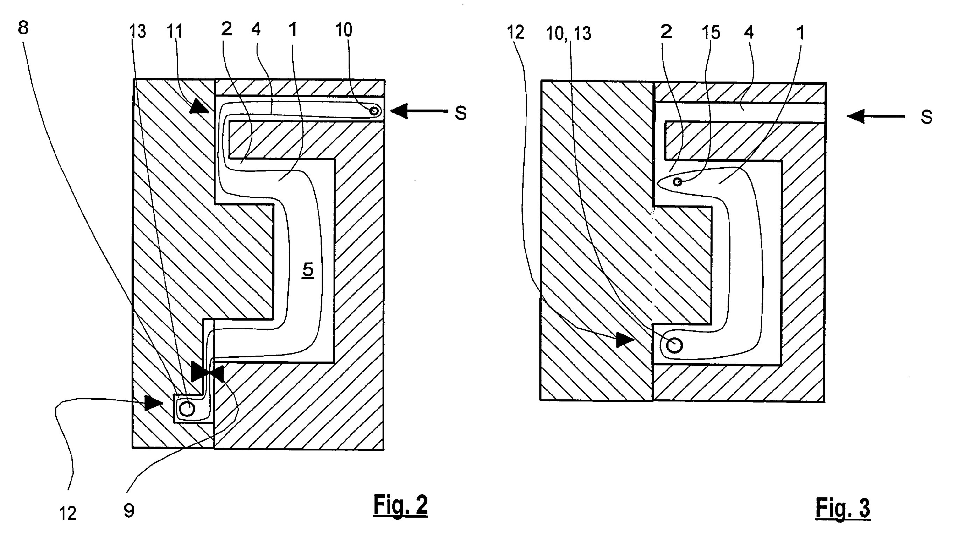

In Fig. 1 ist zu sehen, daß die Eingabe der Flüssigkeit entlang des Schmelzefließweges 4 im Bereich des Angusses 11 erfolgt. Die detailliertere Ausgestaltung des Bereichs des Spritzgießwerkzeugs ist in den Figuren 2 und 3 wiedergegeben.

Wie in Fig. 2 zu sehen ist, wird Schmelze S im Angußbereich 11 in die Kavität 5 injiziert. Über die Einspritzdüse für Flüssigkeit 10 wird beispielsweise Wasser eingegeben. Die verdrängte Schmelze strömt, wie es bereits oben erwähnt wurde, am Fließwegende von der Hauptkavität 5 in die Nebenkavität 8, wobei mittels Ventilmitteln 9 das Überströmen geregelt wird. Nach dem zumindest teilweise erfolgten Aushärten muß die Flüssigkeit, die den Hohlraum 1 füllt, aus diesem wieder entfernt werden. Hierzu wird Druckluft in die Einspritzdüse für Flüssigkeit 10 eingeleitet.

Wie der Figur 2 zu entnehmen ist, erstreckt sich der Hohlraum 1 über die Kavität 5 hinaus in die Nebenkavität, was durch die Eingabe von Flüssigkeit in die Schmelze bewerkstelligt wurde. Im Bereich der Überlaufkavität 8, nämlich an der Ausblasstelle 12 für Flüssigkeit, ist eine Ausblasdüse 13 positioniert. Durch die Druckluftinjektion durch die Düse 10 kann alle Flüssigkeit aus dem Hohlraum 1 wieder ausgeblasen werden. Sie wird durch die Ausblasdüse 13 ausgetrieben. Dabei kann - unterstützender Weise - an die Ausblasdüse 13 ein Vakuum angelegt werden. Die Ausblasdüse 13 kann auch am Ende der Hauptkavität 5 angeordnet werden.

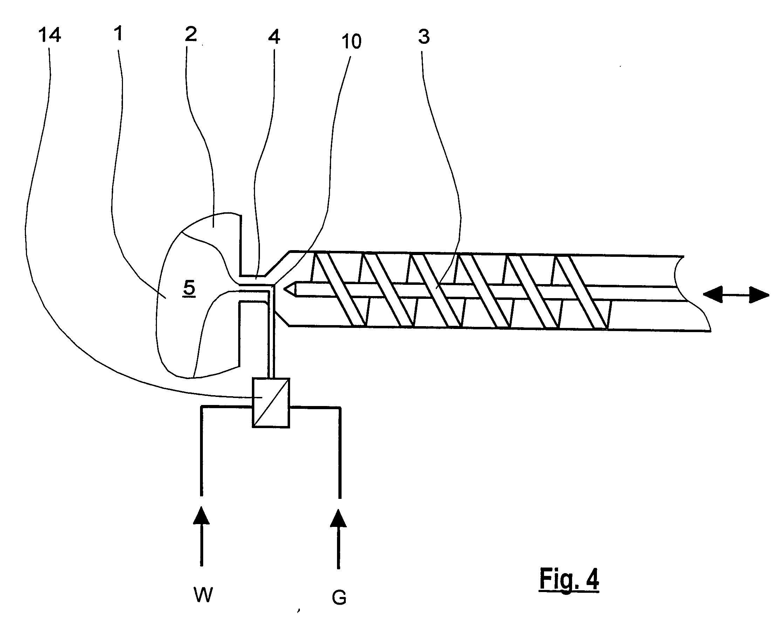

In Figur 3 ist ein anderes Verfahren der Erfindung dargestellt. Die vollständig mit Schmelze gefüllte Kavität wird über die Einspritzdüse für Flüssigkeit 10, die am Ende der Kavität angeordnet ist, mit Flüssigkeit beaufschlagt. Die so verdrängte Schmelze wird entgegen ihrer Fließrichtung über den Schmelzefließweg 4 zurückgedrückt und zwar so weit, daß die Gaseingabestelle 15 in den gebildeten Hohlraum 1 hinein ragen kann. Anschließend wird der Hohlraum 1 mit Druckgas beaufschlagt, um die Flüssigkeit über die Ausblasstelle für Flüssigkeit 13 zumindest teilweise aus dem Hohlraum zu entfernen. Hierbei ist vorgesehen, eine Düse wie in Figur 4 beschrieben einzusetzen. Das Verfahren ist aber auch einsetzbar, ohne die Schmelze zurückzudrücken, hierbei ist lediglich darauf zu achten, daß die Gaseingabestelle 15 so positioniert wird, daß sichergestellt ist, daß diese wie oben beschrieben in den Hohlraum 1 hinein ragen kann, da beim reinen Volumenausgleich dieser wesentlich kleiner sein wird.

In Fig. 4 ist zu sehen, daß sich vorrichtungstechnisch eine besonders vorteilhafte Ausgestaltung ergibt, wenn ein Einspritzelement 14 verwendet wird, durch das wahlweise Flüssigkeit (Wasser) W bzw. Druckluft (Gas) G eingespritzt werden kann. In Fig. 4 reicht die Einspritzdüse 10 für Flüssigkeit und Gas zwar in den Bereich des Schmelzefließweges 4 von der Einspritzeinheit 3 in die Werkzeugkavität. Allerdings ist es genauso möglich, das kombinierte Einspritzelement 14 für Flüssigkeit und Gas so anzuordnen, daß es über die entsprechende Düse Flüssigkeit bzw. Gas direkt in die Kavität des Werkzeugs einspritzt.

Das vorstehend beschriebene Verfahren läßt sich vorteilhaft auch für sonst übliche Spritzgießverfahren einsetzten. Beispielsweise kann es auch gut eingesetzt werden, wenn das Formteil aus mehr als einer Kunststoffkomponente gespritzt wird (2-K-Verfahren).

Weiterhin ist es beispielsweise möglich, die Flüssigkeit an zwei Stellen ins Werkzeug zu injizieren, damit zwei Medienblasen zu erzeugen und diese durch entsprechende Drucksteuerung zu veranlassen, miteinander zu verschmelzen. Diese Technologie ist als solche bekannt.

Die Eingabe der Flüssigkeit kann weiterhin auch in den Angußverteiler erfolgen, wodurch mehrere Teilkavitäten mit Flüssigkeit versorgt werden können.

### Bezugszeichenliste:

- 1: Hohlraum
- 2: Formteil
- 3: Einspritzeinheit
- 4: Schmelzefließweg
- 5: Kavität
- 6: Spritzgießwerkzeug
- 7: Wandungen der Kavität
- 8: Nebenkavität
- 9: Ventilmittel
- 10: Einspritzdüse für Flüssigkeit
- 11: Angußbereich
- 12: Ausblasstelle für Flüssigkeit
- 13: Ausblasdüse
- 14: Einspritzelement
- 15: Gaseingabestelle

- S: Schmelze
- W: Flüssigkeit (Wasser)
- G: Gas

## Patentansprüche

1. Verfahren zum Spritzgießen von mindestens einen Hohlraum (1) aufweisenden Formteilen (2) aus thermoplastischem Kunststoffmaterial, das die Schritte aufweist:
a) Einspritzen von thermoplastischer Kunststoffschmelze von einer Einspritzeinheit (3) entlang eines Schmelzefließweges (4) in die Kavität (5) eines Spritzgießwerkzeugs (6);
b) Einspritzen eines Fluids in das noch schmelzflüssige Kunststoffmaterial, so daß dieses an die Wandungen (7) der Kavität (5) gepreßt wird;
c) Abkühlenlassen des Kunststoffmaterials, bis dieses selbsttragend das Formteil (2) bildet;
d) Entformen des Formteils (2) aus der Kavität (5) des Spritzgießwerkzeugs (6);
**dadurch gekennzeichnet,**
**daß** die Füllung der Kavität (5) mit Kunststoffschmelze gemäß Schritt a) so erfolgt, daß die Kavität (5) vollständig volumetrisch mit Kunststoffschmelze gefüllt wird, und
**daß** als Fluid, das gemäß Schritt b) in das noch schmelzflüssige Kunststoffmaterial eingespritzt wird, eine Flüssigkeit eingesetzt wird,
wobei während oder nach Schritt b) und vor Schritt c) des weiteren Druckgas in den durch die Flüssigkeit gebildeten Hohlraum (1) eingebracht wird.

2. Verfahren nach Anspruch 1, **dadurch gekennzeichnet, daß** während des Verfahrensschrittes b) gemäß Anspruch 1 ein Teil des noch schmelzflüssigen Kunststoffmaterials aus der Kavität (5) in eine entformbare Nebenkavität (8) verdrängt wird.

3. Verfahren nach Anspruch 2, **dadurch gekennzeichnet, daß** der Fluß von Kunststoffmaterial von der Kavität (5) in die Nebenkavität (8) durch Ventilmittel (9) gesteuert wird, die gemäß zeitlicher Vorgabe geöffnet bzw. geschlossen werden.

4. Verfahren nach einem der Ansprüche 1 bis 3, **dadurch gekennzeichnet, daß** die Flüssigkeit entlang des Schmelzefließweges (4) durch den Angußbereich (11) oder direkt mittels mindestens einer Einspritzdüse (10) in die Kavität (5) eingespritzt wird.

5. Verfahren nach Anspruch 4, **dadurch gekennzeichnet, daß** ein Teil des sich in der Kavität (5) befindlichen Kunststoffmaterials während Schritt b) gemäß Anspruch 1 durch die eingespritzte Flüssigkeit in Richtung auf die Einspritzeinheit (3) zu aus der Kavität (5) heraus zurückgetrieben wird.

6. Verfahren nach einem der Ansprüche 1 bis 5, **dadurch gekennzeichnet, daß** vor dem Einspritzen der thermoplastischen Kunststoffschmelze nach Schritt a) gemäß Anspruch 1 in der Kavität (5) ein gegenüber dem Umgebungsdruck erhöhter Druck durch Einbringen eines Gases aufgebaut wird.

7. Verfahren nach einem der Ansprüche 1 bis 6, **dadurch gekennzeichnet, daß** die Flüssigkeit vor dem Einspritzen in das noch schmelzflüssige Kunststoffmaterial nach Schritt a) gemäß Anspruch 1 temperiert wird.

8. Verfahren nach Anspruch 7, **dadurch gekennzeichnet, daß** die Flüssigkeit auf einen vorgegebenen Temperaturbereich gekühlt wird.

9. Verfahren nach einem der Ansprüche 1 bis 8, **dadurch gekennzeichnet, daß** nach Schritt c) und vor Schritt d) gemäß Anspruch 1 folgender Verfahrensschritt ausgeführt wird:
c') Einpressen von Druckgas, vorzugsweise Druckluft, entlang des Weges, über den die Flüssigkeit in das Kunststoffmaterial eingespritzt wurde, und Ausblasen der Flüssigkeit aus dem Hohlraum (1) des Formteils (2) an mindestens einer Ausblasstelle (12), die sich an einer Stelle befindet, die von der Eingabestelle der Flüssigkeit entfernt ist.

10. Verfahren nach einem der Ansprüche 1 bis 8, **dadurch gekennzeichnet, daß** nach Schritt c) und vor Schritt d) gemäß Anspruch 1 folgender Verfahrensschritt ausgeführt wird:
c") Einpressen von Druckgas, vorzugsweise Druckluft, an einer Gaseingabestelle, die von der Stelle entfernt ist, an der die Flüssigkeit in das Kunststoffmaterial eingespritzt wurde, und Ausblasen der Flüssigkeit aus dem Hohlraum (1) des Formteils (2) über die Stelle, an der die Flüssigkeit in das Kunststoffmaterial eingespritzt wurde.

11. Verfahren nach einem der Ansprüche 1 bis 8, **dadurch gekennzeichnet, daß** nach Schritt c) und vor Schritt d) gemäß Anspruch 1 folgender Verfahrensschritt ausgeführt wird:
c"') Anlegen eines Vakuums an einer fluidisch mit dem flüssigkeitsgefüllten Hohlraum (1) in Verbindung stehenden Stelle, um die sich im Hohlraum (1) befindliche Flüssigkeit aus dem Hohlraum (1) abzusaugen.

12. Verfahren nach Anspruch 11, **dadurch gekennzeichnet, daß** das Vakuum an der Einspritzdüse (10) für Flüssigkeit angelegt wird.

13. Verfahren nach einem der Ansprüche 1 bis 12, **dadurch gekennzeichnet, daß** auf die in die Kunststoffschmelze eingebrachte Flüssigkeit während der Schritte b) und/oder c) gemäß Anspruch 1 ein Druck ausgeübt wird, der gemäß einem vorgegebenen Zeitprofil geregelt oder gesteuert wird.

14. Verfahren nach Anspruch 13, **dadurch gekennzeichnet, daß** der Druck in einer ersten Zeitphase auf einem ersten, vorzugsweise konstanten, Niveau und in einer späteren, zweiten Zeitphase auf einem zweiten, vorzugsweise konstanten, Niveau geregelt oder gesteuert wird, wobei das erste Druckniveau niedriger als das zweite ist.

15. Verfahren nach einem der Ansprüche 1 bis 14, **dadurch gekennzeichnet, daß** als Flüssigkeit eine Flüssigkeit hoher Wärmekapazität oder Wasser oder Öl oder ein verflüssigtes Gas eingesetzt wird.
